# EUROPEAN PATENT SPECIFICATION

(11) **EP 0 476 768 B1**
(45) Date of publication and mention of the grant of the patent: **11.01.1995**
(21) Application number: 91202348.8
(22) Date of filing: 13.09.1991
(51) Int. Cl.: A01B 33/14

(54) **A soil working member**
Bodenbearbeitungswerkzeug
Outil pour le travail du sol

(30) Priority: 17.09.1990 NL 9002038
(43) Date of publication of application: 25.03.1992
(73) Proprietor: C. van der Lely N.V., NL-3155 PD Maasland (NL)
(72) Inventor: Bom, Cornelis Johannes Gerardus, NL-3181 VC Rozenburg (NL); Ouwerkerk, Cornelis Gerardus, NL-3181 BE Rozenburg (NL)
(74) Representative: Mulder, Herman

(56) References cited:
- GB-A- 2 128 461
- GB-A- 2 133 262
- GB-A- 2 200 522
- NL-A- 7 401 323
- NL-A- 7 610 045

## Description

This invention relates to a soil working member, in particular suitable for a soil working machine such as a rotary harrow, provided with a holder having a first bore and with a soil working tool capable of being fixed in said first bore, which holder also has a second bore for fitting a fastening member by means of which the soil working tool is capable of being fixed in position in the holder.

Such a soil working member is known from GB-A-2200522; the holder of the soil working tool described in that document has the second bore extending in a direction substantially parallel to that of the first bore, in which the soil working tool together with a wedge is brought, while the soil working tool is fixed in position by a bolt, clamp or pin exerting a force on the wedge in the vertical direction.

The invention has for its object to achieve an advantageous fixation of the soil working tool in the holder with respect to known soil working members from a construction point of view. In accordance with the invention, the soil working member as described in the opening paragraph is characterized in that the second bore is sloping upwardly from the outside of the holder in the direction of the end of the portion of the soil working tool inserted in the holder and opens into the first bore, the fastening member being capable to exert a force on the soil working tool, having a component in the longitudinal direction of the first bore.

In an advantageous embodiment of the invention the soil working member is of such a design that, with the soil working tool being inserted in the first bore, an abutment is in front of the mouth of the second bore in the first bore. Particularly, the abutment is in a plane perpendicular to the longitudinal direction of the second bore.

In order to ensure that in the direction of the first bore the component of the force acting on the abutment is sufficient in magnitude, the second bore lies at an angle to the longitudinal direction of the first bore, which angle is in a range from 20° to 70° and preferably in a range from 40° to 50°. The force to be applied to the abutment can, according to the invention, be simply achieved by using a bolt to be screwed into the second bore, together with a locking nut, for a fastening member.

To implement a firm attachment of the soil working tool to the holder, the soil working tool according to the invention is made to fit the first bore. In order to have the upward pointing component of the force acting on the abutment produce the maximum effect feasible, the first bore has, according to the invention, a portion tapering upward in the direction of the end of the portion of the soil working tool provided in the holder. Further, the first bore has a further upward sloping cylindrical portion on the tapered portion. By not having the tapered portion extend over the full length or substantially full length of the first bore, an appropriate attachment of the soil working tool is achieved through only a small rotation of the fastening member in the second bore. In an exemplary embodiment the second bore opens into the cylindrical portion of the first bore.

To facilitate the easy removal of the soil working tool after the fastening member has been loosened, the first bore extends, according to the invention, through the full holder. Preferably, in the vicinity of the top side, the holder is provided with a recess for a sealing ring to be fitted round the soil working tool placed in the holder.

To achieve the appropriate positioning of the soil working tool in the holder, the holder according to the invention is provided, on the bottom side, with recesses to accommodate cams being on the soil working tool.

In an embodiment, in particular where the soil working tool is used in a rotary harrow, according to the invention, two first bores are provided in the holder, which bores are positioned on either side of, and at the same distance from, the axis of rotation of the soil working member, and for each soil working member there are two soil working tools inserted in said first bores, each of which is fixed in position by an appropriate fastening member provided in a corresponding second bore. Here, the centre lines of the relevant first bores are in mutually parallel planes being symmetrical with respect to the axis of rotation.

In particular, the centre lines of the relevant first bores are mutually divergent at an angle of between 5° and 15°, preferably about 8°, with respect to the axis of rotation. Furthermore, it is advantageous that the second holes provided in the holder are on its rear with respect to the direction of motion of the soil working tools. This prevents that vegetation clings to the fastening member portions extending from the holder. It is particularly advantageous when the second bores are provided at an angle of between 10° and 20°, preferably 15°, with respect to the mutually parallel planes being symmetrical with respect to the axis of rotation, in which planes the centre lines of the first bores are situated and that in the direction of the axis of rotation.

Apart from a soil working member such as described hereinbefore, the present invention also relates to a soil working tool such as is used in such a soil working member and to a soil working machine, preferably a rotary harrow, provided with such a soil working member.

The invention will be further explained with reference to the accompanying drawings.
Figure 1 shows a top view of a soil working machine in which the soil working member according to the invention is applicable;

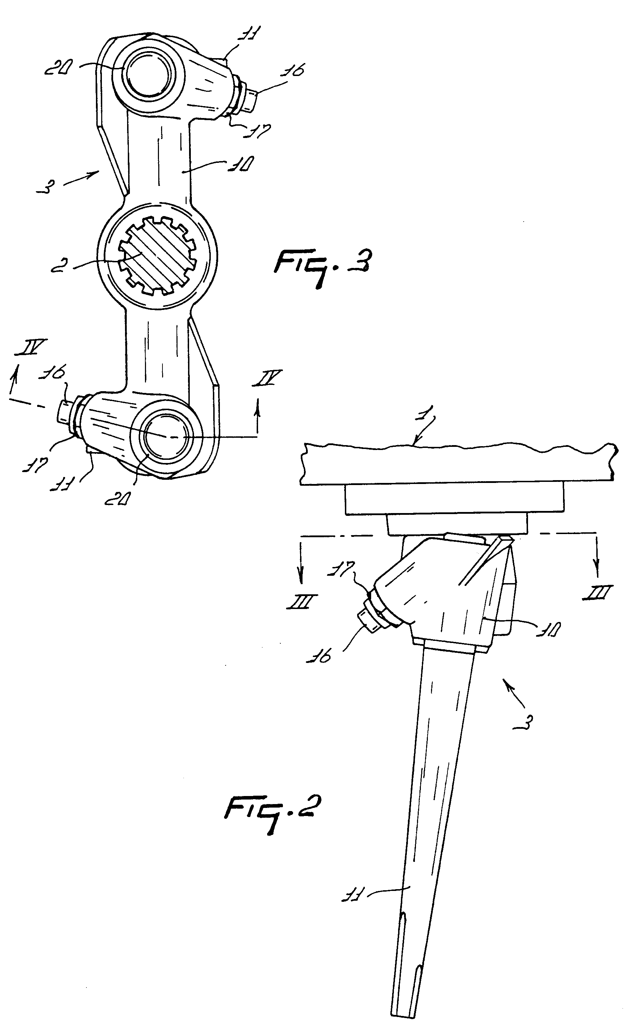

Figure 2 shows a side view of a soil working tool as used in the soil working member according to the invention;
Figure 3 shows a top view of the holder of the soil working member according to the invention, which holder is suitable for the insertion of two soil working tools;
Figure 4 shows a partial section view of the soil working member according to the invention, in which section it is indicated how a soil working tool is secured in position in the holder.

The invention is not limited to the embodiment shown in the drawings; it serves only the purpose of illustrating the invention.

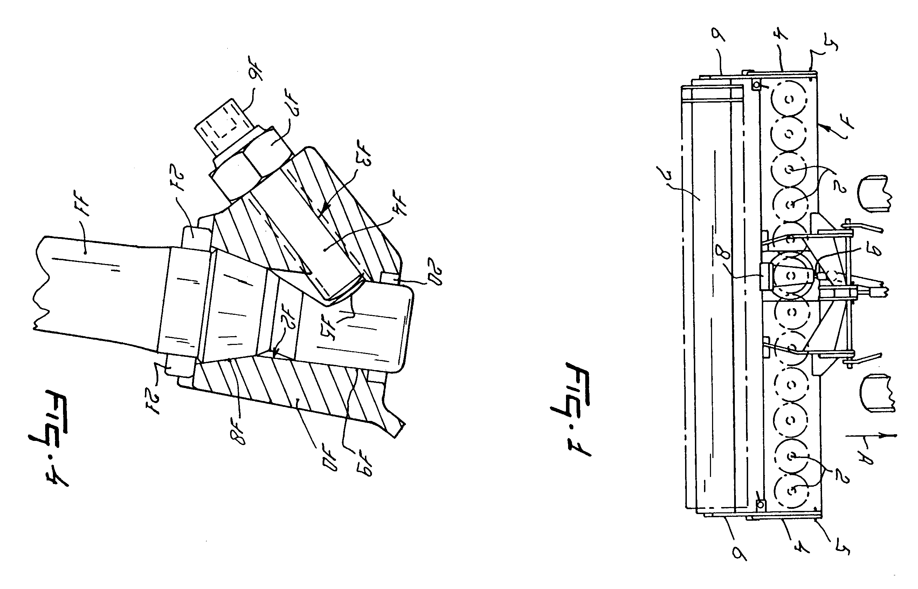

The soil working machine of which a top view is shown in Figure 1 is a rotary harrow and is suitable for seedbed preparation. The machine comprises a hollow, box- or tube-like frame portion 1 which extends transversely to the direction of operative travel A, in which frame portion, at a constant spacing of preferably 25 cm, shafts 2 of soil working members 3 are rotary supported by bearings, which shafts 3 extend in upward, preferably vertical, direction. The ends of the hollow, box- or tube-like frame portion 1 are closed by means of upright plates 4 extending in the direction of operative travel A which are at least substantially parallel to a vertical plane in the direction of operative travel. Near the front, each of the plates 4 is provided with a transversal shaft 5, all this being arranged such that the longitudinal centre lines of the shafts 5 are in line.

On each of the shafts 5 there is a swivelling arm 6 extending rearward along the inner side of a plate 4. A freely rotatable roller 7 is provided between the free rear ends of the arms 6, and in the present examplary embodiment it is designed as a packer roller, but it may also be a cage roller.

Within the frame portion 1, each of the shafts 2 for a soil working member 3 is provided with a spur gear (not shown), these gears being intermeshing in a drive arrangement.

Each of the shafts 2 is supported on the bottom side by means of a ball bearing accommodated in a bearing house in the frame portion 1. The shaft 2 of a soil working member being in or near the centre has an extension in upward direction and reaches into a gear box 8 provided on the frame portion 1, where, through a bevel gearing, the extension drives a shaft extending in the direction of operative travel A, which shaft is drivingly connected with a shaft 9 through a variable speed gear located on the rear side of gear box 8. This shaft 9 is capable of being coupled to the power take-off of a tractor through an intermediate shaft in the usual way.

Each of the soil working members 3 comprises an at least substantially horizontal holder 10 which is fitted on the end of a shaft 2 projecting from the bottom surface of frame portion 1 and which holder is, at the extremities, provided with soil working tools 11 in the shape of tines pointing downward. In the holder 10 there is provided a first bore 12 in which the soil working tool 11 can be fixed in position, as well as a second bore 13 for the installation of a fastening member 14 by means of which the soil working tool 11 can be secured in the holder 10. The portion of the soil working tool 11 inserted in the holder 10 has a stop face 15, obtained by making a notch, on which stop face the force exerted by the fastening member 14 is acting. The second bore 13 is sloping upwards from the outside of the holder 10 in the direction of the extremity of the soil working tool portion inserted in the holder 10 and is opening into the first bore 12. When the soil working tool 11 is provided in the first bore 12, the stop face 15 is in front of the mouth of the second bore 13 in the first bore 12. The stop face 15 is in a plane perpendicular to the longitudinal direction of the second bore 13. As mentioned before, the second bore 13 is sloping upwards in relation to the first bore 12. The angle of the second bore in relation to the longitudinal direction of the first bore is in an angular range from 20° to 70°, preferably in an angular range from 40° to 50°. In the present exemplary embodiment the fastening member 14 is made up of a bolt 16 to be screwed into the second bore 13 and a locking nut 17. The first bore 12 has a portion 18 tapering upward in the direction of the extremity of the portion of the soil working tool 11 inserted in the holder 10 and a contiguous cylindrical portion 19 running further upward, with the second bore 13 opening into the cylindrical portion 19 of the first bore 12. In the exemplary embodiment shown, the first bore 12 extends fully through the holder 10. On the top side the holder 10 is further provided with a recess 20 for a sealing ring to be placed round the soil working tool 11 inserted in the holder 10. On the bottom side the holder 10 is provided with recesses to accommodate cams 21 being on the soil working tool 11.

In the present example of an embodiment the centre lines of the relevant first bores 12 of a soil working member 3 are in mutually parallel planes being symmetrical with respect to the axis of rotation 2. The centre lines of the relevant first bores 12, however, are mutually divergent at an angle of between 5° and 15°, preferably 8°, with respect to the axis of rotation 2. With respect to the direction of movement of the soil working tools 11, the second bores 13 are provided on the rear side of the holder 10 and in particular, at an angle of between 10° and 20°, preferably 15°, inward or in other words, in the direction of the axis of rotation 2, with respect to the mutually parallel planes being symmetrical to the axis of rotation in which planes the centre lines of the first bores 12 are situated.

## Claims

1. A soil working member, particularly for a soil working machine such as a rotary harrow, provided with a holder (10) having a first bore (12) and with a soil working tool (11) capable of being fixed in said first bore (12), which holder (10) also has a second bore (13) for fitting a fastening member (14) by means of which the soil working tool (11) is capable of being fixed in the holder (10), characterized in that the second bore (13) is sloping upwardly from the outside of the holder (10) in the direction of the end of the portion of the soil working tool (11) inserted in the holder (10) and opens into the first bore (12), the fastening member(14) being capable to exert a force on the soil working tool (11), having a component in the longitudinal direction of the first bore (12).

2. A soil working member as claimed in claim 1, characterized in that the fastening member (14) abuts against a part of the working tool (11).

3. A soil working member as claimed in claim 1 or 2, characterized in that, with the soil working tool (11) being inserted in the first bore (12), an abutment (15) is in front of the mouth of the second bore (13) in the first bore (12).

4. A soil working member as claimed in claim 3, characterized in that the abutment (15) is in a plane perpendicular to the longitudinal direction of the second bore (13).

5. A soil working member as claimed in any one of the preceding claims, characterized in that the second bore (13) is at an angle to the longitudinal direction of the first bore (12), which angle is in an angular range from 20° to 70°, and preferably in an angular range from 40° to 50°.

6. A soil working member as claimed in any one of the preceding claims, characterized in that the fastening member (14) is made up of a bolt (16) to be screwed into the second bore (13) and a locking nut (17).

7. A soil working member as claimed in any one of the preceding claims, characterized in that the soil working tool (11) is made to fit the first bore (12).

8. A soil working member as claimed in any one of the preceding claims, characterized in that the first bore (12) has a portion (18) which is upward tapering in the direction of the end of the portion of the soil working tool (11) inserted in the holder (10).

9. A soil working member as claimed in claim 8, characterized in that the first bore (12) has a cylindrical portion (19) extending further upwardly from the taper portion (18).

10. A soil working member as claimed in claim 9, characterized in that the second bore (13) opens into the cylindrical portion (19) of the first bore (12).

11. A soil working member as claimed in any one of the preceding claims, characterized in that the first bore (12) extends fully through the holder (10).

12. A soil working member as claimed in claim 11, characterized in that on the top side the holder (10) is provided with a recess (20) for a sealing ring to be placed round the soil working tool (11) inserted in the holder.

13. A soil working member as claimed in any one of the preceding claims, characterized in that on the bottom side the holder (10) is provided with recesses for cams (21) being on the soil working tool (11).

14. A soil working member as claimed in any one of the preceding claims, characterized in that in the holder (10) there are provided two first bores (12) located on either side of, and at the same distance from, the axis of rotation (2) of the soil working tool (11) applied in a rotary harrow, and that, for each soil working member (3), there are two soil working tools (11) fitted in these first bores (12), each of which soil working tools (11) being fixed by an appropriate fastening member (14) fitted in a corresponding second bore (13).

15. A soil working member as claimed in claim 14, characterized in that the centre lines of the relevant first bores (12) are located in mutually parallel planes being symmetrical to the axis of rotation (2).

16. A soil working member as claimed in claim 15, characterized in that the centre lines of the relevant first bores (12) are mutually divergent at an angle of about 5° to 15°, preferably 8°, with respect to the axis of rotation (2).

17. A soil working member as claimed in any one of claims 14 to 17, characterized in that in relation to the direction of movement of the soil working tools (11) the second bores (13) are provided on the rear side of the holder (10).

18. A soil working member as claimed in claim 17, characterized in that the second bores (13) are provided at an angle of between 10° and 20°, preferably about 15°, with respect to the mutually parallel planes being symmetrical to the axis of rotation (2), in which planes there are the centre lines of the first bores (12) and that in the direction of the axis of rotation (2).

19. A soil working tool (11) as applied in a soil working member as claimed in any one of the preceding claims.

20. A soil working machine, in particular a rotary harrow, provided with a soil working member as claimed in any one of claims 1 to 18.

## Patentansprüche

1. Bodenbearbeitungswerkzeug, insbesondere für eine Bodenbearbeitungsmaschine wie z. B. eine Kreiselegge, das einen Halter (10) mit einer ersten Bohrung (12) sowie ein Arbeitswerkzeug (11) aufweist, das in der ersten Bohrung (12) zu befestigen ist, wobei der Halter (10) ferner eine zweite Bohrung (13) zum Anbringen eines Befestigungsgliedes (14) aufweist, mittels dessen das Arbeitswerkzeug (11) in dem Halter (10) zu befestigen ist,
dadurch gekennzeichnet, daß die zweite Bohrung (13) von der Außenseite des Halters (10) schräg nach oben in Richtung auf das Ende des in den Halter (10) eingesetzten Teiles des Arbeitswerkzeuges (11) verläuft und in die erste Bohrung (12) mündet, wobei von dem Befestigungsglied (14) auf das Arbeitswerkzeug (11) eine Kraft auszuüben ist, die eine in Längsrichtung der ersten Bohrung (12) gerichtete Komponente hat.

2. Bodenbearbeitungswerkzeug nach Anspruch 1,
dadurch gekennzeichnet, daß das Befestigungsglied (14) an einem Teil des Arbeitswerkzeuges (11) zur Anlage kommt.

3. Bodenbearbeitungswerkzeug nach Anspruch 1 oder 2,
dadurch gekennzeichnet, daß bei in die erste Bohrung (12) eingesetztem Arbeitswerkzeug (11) ein Anschlag (15) vor der Mündung der zweiten Bohrung (13) liegt.

4. Bodenbearbeitungswerkzeug nach Anspruch 3,
dadurch gekennzeichnet, daß der Anschlag (15) in einer Ebene liegt, die senkrecht zu der Längsrichtung der zweiten Bohrung (13) verläuft.

5. Bodenbearbeitungswerkzeug nach einem der vorhergehenden Ansprüche,
dadurch gekennzeichnet, daß die zweite Bohrung (13) mit der Längsrichtung der ersten Bohrung (12) einen Winkel bildet, der in einem Bereich zwischen 20° und 70° und vorzugsweise in einem Bereich zwischen 40° und 50° liegt.

6. Bodenbearbeitungswerkzeug nach einem der vorhergehenden Ansprüche,
dadurch gekennzeichnet, daß das Befestigungsglied (14) durch einen in die zweite Bohrung (13) einzuschraubenden Bolzen (16) und eine Sicherungsmutter (17) gebildet ist.

7. Bodenbearbeitungswerkzeug nach einem der vorhergehenden Ansprüche,
dadurch gekennzeichnet, daß das Arbeitswerkzeug (11) derart ausgebildet ist, daß es in die erste Bohrung (12) passend einzusetzen ist.

8. Bodenbearbeitungswerkzeug nach einem der vorhergehenden Ansprüche,
dadurch gekennzeichnet, daß die erste Bohrung (12) einen Abschnitt (18) aufweist, der nach oben in Richtung auf das Ende des in den Halter (10) eingesetzten Teiles des Arbeitswerkzeuges (11) verjüngt ist.

9. Bodenbearbeitungswerkzeug nach Anspruch 8,
dadurch gekennzeichnet, daß die erste Bohrung (12) einen zylindrischen Abschnitt (19) aufweist, der sich von dem verjüngten Abschnitt (18) aus nach oben erstreckt.

10. Bodenbearbeitungswerkzeug nach Anspruch 9,
dadurch gekennzeichnet, daß die zweite Bohrung (13) in den zylindrischen Abschnitt (19) der ersten Bohrung (12) mündet.

11. Bodenbearbeitungswerkzeug nach einem der vorhergehenden Ansprüche,
dadurch gekennzeichnet, daß sich die erste Bohrung (12) vollständig durch den gesamten Halter (10) hindurch erstreckt.

12. Bodenbearbeitungswerkzeug nach Anspruch 11,
dadurch gekennzeichnet, daß die Oberseite des Halters (10) eine Ausnehmung (20) zur Aufnahme eines Dichtringes aufweist, der derart anzubringen ist, daß er das in den Halter eingesetzte Arbeitswerkzeug (11) umschließt.

13. Bodenbearbeitungswerkzeug nach einem der vorhergehenden Ansprüche,
dadurch gekennzeichnet, daß die Unterseite des Halters (10) Ausnehmungen für Nocken (21) aufweist, welche an dem Arbeitswerkzeug (11) ausgebildet sind.

14. Bodenbearbeitungswerkzeug nach einem der vorhergehenden Ansprüche,
dadurch gekennzeichnet, daß der Halter (10) zwei erste Bohrungen (12) aufweist, die beiderseits der Achse (2) der Rotationsbahn des an einer Kreiselegge angebrachten Arbeitswerkzeuges (11) in gleichem Abstand zu dieser Achse angeordnet sind, und daß jedes Bodenbearbeitungswerkzeug (3) zwei in diese ersten Bohrungen (12) eingesetzte Arbeitswerkzeuge (11) aufweist, wobei jedes Arbeitswerkzeug (11) mittels eines zugehörigen Befestigungsgliedes (14) befestigt ist, das in eine zugehörige zweite Bohrung (13) eingesetzt ist.

15. Bodenbearbeitungswerkzeug nach Anspruch 14,
dadurch gekennzeichnet, daß die Mittellinien der betreffenden ersten Bohrungen (12) in Ebenen liegen, die zueinander parallel und zu der Rotationsachse (2) symmetrisch sind.

16. Bodenbearbeitungswerkzeug nach Anspruch 15,
dadurch gekennzeichnet, daß die Mittellinien der betreffenden ersten Bohrungen (12) in einem Winkel von etwa 5° bis 15°, vorzugsweise von 8°, in bezug auf die Rotationsachse (2) divergieren.

17. Bodenbearbeitungswerkzeug nach einem der Ansprüche 14 bis 17,
dadurch gekennzeichnet, daß die zweiten Bohrungen (13) in bezug auf die Bewegungsrichtung der Arbeitswerkzeuge (11) an der Rückseite des Halters (10) angeordnet sind.

18. Bodenbearbeitungswerkzeug nach Anspruch 17,
dadurch gekennzeichnet, daß die zweiten Bohrungen (13) in einem Winkel von 10° bis 20°, vorzugsweise von etwa 15°, relativ zu den parallelen, zu der Rotationsachse (2) symmetrischen Ebenen angeordnet sind, in welchen die Mittellinien der ersten Bohrungen (12) in Richtung der Rotationsachse (2) liegen.

19. Arbeitswerkzeug (11) nach einem der vorgehenden Ansprüche zur Verwendung in einem Bodenbearbeitungswerkzeug.

20. Bodenbearbeitungsmaschine, insbesondere Kreiselegge, mit einem Bodenbearbeitungswerkzeug nach einem der Ansprüche 1 bis 18.

## Revendications

1. Organe travaillant le sol, en particulier pour une machine travaillant le sol, telle qu'une herse rotative, munie d'un support (10) ayant une première forure (12) et d'un outil (11) travaillant le sol, susceptible d'être fixé dans ladite première forure (12), lequel support (10) a aussi une deuxième forure (13) pour l'engagement d'un organe de fixation (14) au moyen duquel l'outil (11) travaillant le sol est susceptible d'être fixé dans le support (10),
**caractérisé** en ce que la deuxième forure (13) est inclinée vers le haut à partir de l'extérieur du support (10) en direction de l'extrémité de la partie de l'outil (11) travaillant le sol, insérée dans le support (10), et débouche dans la première forure (12), l'organe de fixation (14) étant capable d'exercer sur l'outil (11) travaillant le sol une force ayant une composante dans le sens longitudinal de la première forure (12).

2. Organe travaillant le sol selon la revendication 1, caractérisé en ce que l'organe de fixation (14) vient en butée contre une partie de l'outil (11) travaillant le sol.

3. Organe travaillant le sol selon la revendication 1 ou 2, caractérisé en ce que, quand l'outil (11) travaillant le sol est inséré dans la première forure (12), une butée (15) est en face de l'embouchure de la deuxième forure (13) dans la première forure (12).

4. Organe travaillant le sol selon la revendication 3, caractérisé en ce que la butée (15) est dans un plan perpendiculaire au sens longitudinal de la deuxième forure (13).

5. Organe travaillant le sol selon l'une quelconque des revendications précédentes, caractérisé en ce que la deuxième forure (13) forme un angle avec le sens longitudinal de la première forure (12), lequel angle a une valeur comprise entre 20° et 70°, et de préférence comprise entre 40° et 50°.

6. Organe travaillant le sol selon l'une quelconque des revendications précédentes, caractérisé en ce que l'organe de fixation (14) est constitué d'un boulon (16) destiné à être vissé dans la deuxième forure (13) et d'un écrou de blocage (17).

7. Organe travaillant le sol selon l'une quelconque des revendications précédentes, caractérisé en ce que l'outil (11) travaillant le sol est fait pour s'adapter dans la première forure (12).

8. Organe travaillant le sol selon l'une quelconque des revendications précédentes, caractérisé en ce que la première forure (12) a une partie (18) qui se rétrécit vers le haut en direction de l'extrémité de la partie de l'outil (11) travaillant le sol insérée dans le support (10).

9. Organe travaillant le sol selon la revendication 8, caractérisé en ce que la première forure (12) a une partie cylindrique (19) s'étendant plus loin vers le haut à partir de la partie conique (18).

10. Organe travaillant le sol selon la revendication 9, caractérisé en ce que la deuxième forure (13) débouche dans la partie cylindrique (19) de la première forure (12).

11. Organe travaillant le sol selon l'une quelconque des revendications précédentes, caractérisé en ce que la première forure (12) traverse complètement le support (10).

12. Organe travaillant le sol selon la revendication 11, caractérisé en ce que le support (10) est muni sur son côté supérieur d'un logement (20) pour une bague d'étanchéité destinée à être placée autour de l'outil (11) travaillant le sol, inséré dans le support.

13. Organe travaillant le sol selon l'une quelconque des revendications précédentes, caractérisé en ce que le support (10) est muni sur son côté inférieur de logements pour des cames (21) se trouvant sur l'outil (11) travaillant le sol.

14. Organe travaillant le sol selon l'une quelconque des revendications précédentes, caractérisé en ce que dans le support (10) sont prévues deux premières forures (12) situées de part et d'autre de l'axe de rotation (2) de l'outil (11) travaillant le sol appliqué dans une herse rotative, et à la même distance de cet axe, et en ce que pour chaque organe (3) travaillant le sol il y a deux outils (11) travaillant le sol ajustés dans ces premières forures (12), chacun de ces outils (11) travaillant le sol étant fixé par un organe de fixation (14) approprié, ajusté dans une deuxième forure (13) correspondante.

15. Organe travaillant le sol selon la revendication 14, caractérisé en ce que les axes des premières forures (12) pertinentes sont situés dans des plans parallèles entre eux en étant symétriques par rapport à l'axe de rotation (2).

16. Organe travaillant le sol selon la revendication 15, caractérisé en ce que les axes des premières forures (12) pertinentes divergent l'un de l'autre sous un angle d'environ 5° à 15°, de préférence 8°, par rapport à l'axe de rotation 2.

17. Organe travaillant le sol selon l'une quelconque des revendications 14 à 16, caractérisé en ce que, par rapport au sens de mouvement des outils (11) travaillant le sol, les deuxièmes forures (13) sont prévues sur le côté postérieur du support (10).

18. Organe travaillant le sol selon la revendication 17, caractérisé en ce que les deuxièmes forures (13) sont prévues à un angle compris entre 10° et 20°, de préférence d'environ 15°, par rapport aux plans parallèles entre eux étant symétriques par rapport à l'axe de rotation (2), dans lesquels plans sont situés les axes des premières forures (12) et celui dans le sens de l'axe de rotation (2).

19. Outil (11) travaillant le sol, tel qu'appliqué dans un organe travaillant le sol tel que revendiqué dans l'une quelconque des revendications précédentes.

20. Machine travaillant le sol, en particulier une herse rotative, munie d'un organe travaillant le sol tel que revendiqué dans l'une quelconque des revendications 1 à 18.
